# EUROPEAN PATENT SPECIFICATION

(11) **EP 0 818 349 B1**
(45) Date of publication and mention of the grant of the patent: **10.01.2001**
(21) Application number: 96118082.5
(22) Date of filing: 12.11.1996
(51) Int. Cl.: B60P 1/16

(54) **Safety device for the hydraulically actuated telescopic tipping installation of lorries**
Sicherheitseinrichtung für die hydraulisch betätigte teleskopische Kippeinrichtung an Lastkraftwagen
Installation de sécurité pour le dispositif de basculement télescopique actionné hydrauliquement pour camions

(30) Priority: 12.07.1996 IT BO960384
(43) Date of publication of application: 14.01.1998
(73) Proprietor: HS PENTA SRL, 48018 Faenza (Ravenna) (IT)
(72) Inventor: Silimbani, Ruggero, 48018 Faenza, Ravenna (IT)
(74) Representative: Sassatelli, Franco T., Dr.

(56) References cited:
- EP-A- 0 125 926
- DE-A- 4 017 947
- DE-U- 8 910 288

## Description

The invention relates to a safety device for the tipping apparatuses of the telescopic hydraulic hoist tipping bodies of the lorries which, when an emergency takes place for any accidental breakage or anomaly in any part of the oil system of the lorry, prevents the fall of the body automatically, whatever position it has. In the invented device this problem is solved providing a ball check valve placed at the input of the duct of the telescopic master cylinder.

Said valve prevents the downflow of oil from the tipping apparatus in case of an emergency. No automatic safety devices for the tipping apparatuses of the telescopic hydraulic hoist tipping bodies of the lorries are used in the current technology, as the said devices would need complex structural techniques rationally no to be proposed.

At present the oil flow is blocked automatically by means of a stop valve calibrated according to the oil flow rate of the piston.

Said stop valve is however put into use profitably only in the tipping apparatuses provided with a cylinder with only one extensible part.

On this base currently, being the pistons of the telescopic cylinder with different diameters and consequently having different flow rates, must be used for each of said flow rates stop valves calibrated in a different way. The invented device solves the said problem by means of a new particular safety device interacting automatically at the duct input of the telescopic master cylinder which, when an emergency occurs, immediately prevents the downflow of oil. The invented safety device provides the setting up, at the input of the oil duct 1 of a telescopic cylinder 2 which forms the tipping apparatus of the body of the lorry, of an electrovalve 3. Said electrovalve 3 to be connected - on line 4 - with a relay 5 to be started, through electric lines 6 and 7, by pressure switches 8 and 9 excited through pneumatic lines 10 and 11 connected in parallel with the pneumatic lines of fast descent 12 and slow descent 13 respectively, both pneumatic lines make part of the pneumatic system of the lorry.

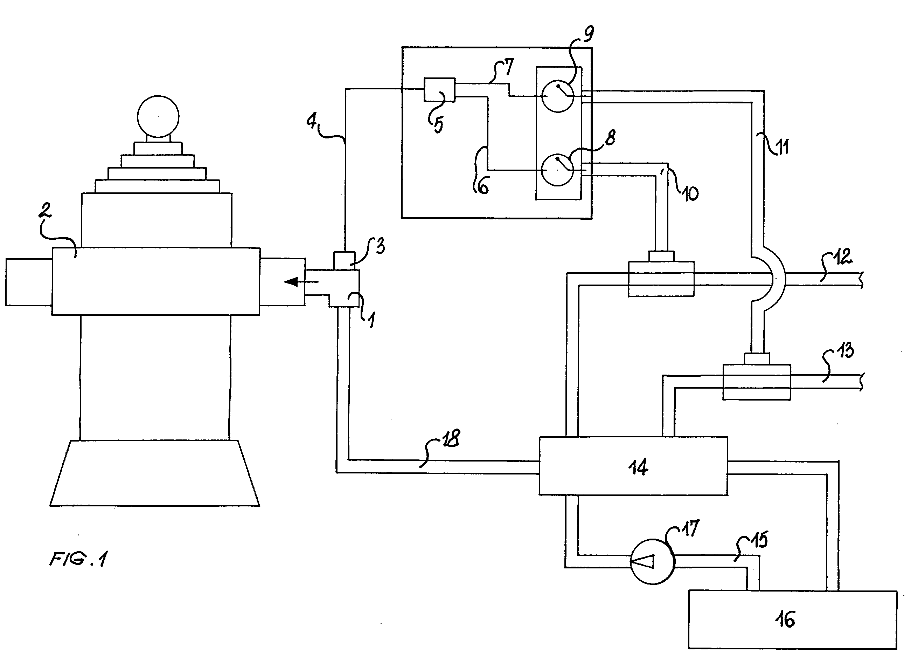

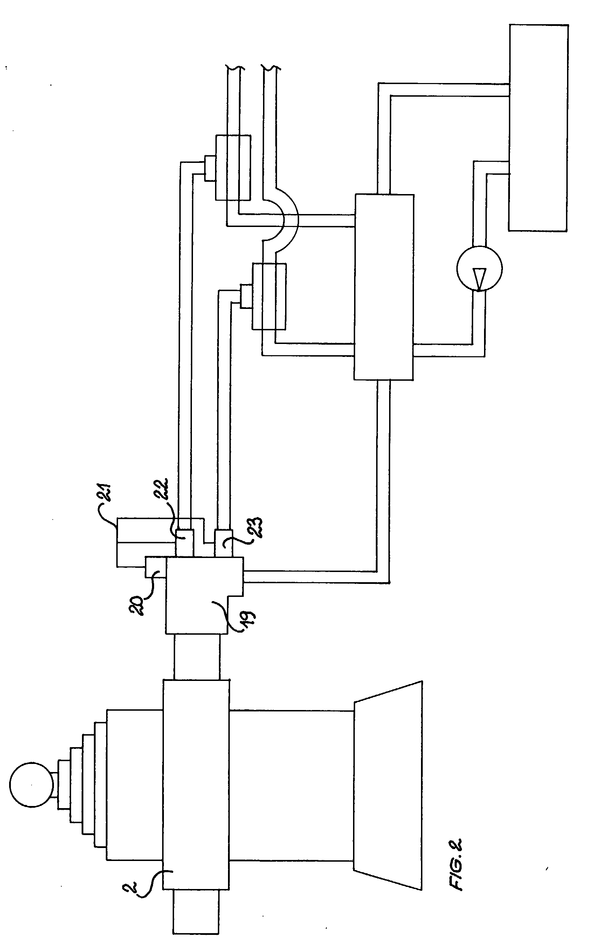

Said pneumatic lines of fast descent 12 and slow descent 13 drive an oleodynamic distributor 14 which, through duct 15 comes out of tank 16, draws up oil by means of the hydraulic pump 17 and lets it into the telescopic cylinder 2 through duct 18. In case of a sudden pressure drop of oil occurs in duct 18, an instantaneous coming into operation of the electrovalve 3 will take place to prevent the downflow of oil from the telescopic cylinder 2. The down-stroke of the telescopic cylinder 2 is then allowed only when - through the setting in of the descent control - into the pneumatic lines of fast descent 12 or slow descent 13 a suitable pressure is generated such to excite the pressure switches 8 and 9. Said switches 8 and 9 activate the electrovalve 3 by means of the electric lines 6 and 7, of the relay 5 and of the electric line 4, thus allowing the downflow of oil from duct 1 of the telescopic cylinder 2. According to a second embodiment of the said device, pressure switches are set up on the body itself of the electrovalve. In this case at the input of the oil duct 19 of the telescopic cylinder 2 is provided an electrovalve 20 to be activated through an electric line 21 by pressure switches 22 and 23. According to a third embodiment, to realize a device to be installed on the lorries with no pneumatic commands, an electrovalve is provided to be controlled by an electric switch with a mechanic control. In this case at the input of the oil duct 24 of the telescopic cylinder 2, an electrovalve 25 is to be set up and operated through an electric line 26 by means of an electric switch 27 to be commanded by a descent control 28 mechanically. The invented device is illustrated in schematic views in the drawings of sheets 1, 2 and 3. In sheet 1 fig. 1 is view of the first safety device with the connections of the interacting elements of the oleodynamic, electrical and pneumatic installations of the lorry. In sheet 2 fig. 2 is view of the invented device where the pressure switches are installed on the body of the electrovalve.

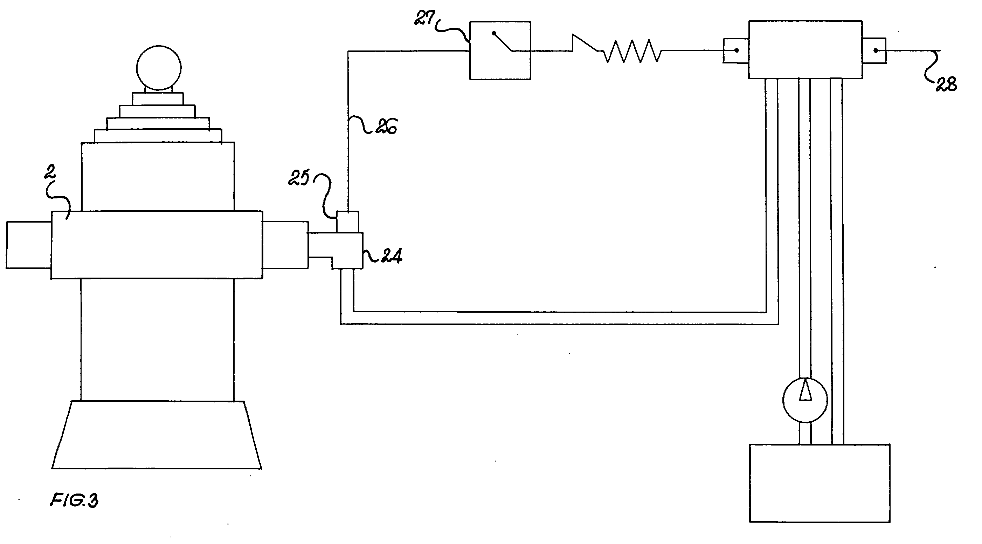

In sheet 3 fig. 3 is view of the invented device to be installed on the lorries with no pneumatic commands.

## Claims

1. Safety device for the tipping apparatuses of the telescopic hydraulic hoist tipping bodies of the lorries providing the setting up, at the input of the oil duct (1) of the telescopic cylinder (2) which forms the tipping apparatus of the body of the lorry, of an electrovalve (3); characterized in that:
- the electrovalve (5) is connected on line (4) with a relay (5) to be started, through electric lines (6 and 7), by pressure switches (8 and 9) excited through pneumatic lines (10 and 11) connected in parallel with the pneumatic lines of fast descent (12) and slow descent (13), both said pneumatic lines making part of the pneumatic system of the lorry;
- the pneumatic lines of fast descent (12) and slow descent (13) drive an oleodynamic distributor (14) which, through a duct (15) comes out of tank (16), draws up oil by means of the hydraulic pump (17) and lets it into the telescpic cylinder (2) through duct (18);
- in case of a sudden pressure drop of oil occurs in the duct (18), an instantaneous coming into operation of the electrovalve (3) will take place to prevent the downflow of oil from the telescopic cylinder (2);
- the down-stroke of the telescopic cylinder (2) is then allowed only when -through the setting in of the descent control- into the pneumatic lines of fast descent (12) or slow descent (13) a suitable pressure is generated such to excited the pressure switches (8 and 9) which activate the electrovalve (3) by means of the electric lines (6 and 7), of the relay (5) and of the other electric line (4) thus allowing the downflow of oil from duct (1) of the telescopic cylinder (2).

2. Safety device for the tipping apparatuses of the telescopic hydraulic hoist tipping bodies of the lorries, as per claim 1), characterized in that in a particular embodiment at the input of the oil duct (19) of the telescopic cylinder (2) is provided an electrovalve (20) to be activated through an electric lines (21) by pressure switches (22 and 23) set up on the body itself of the electrovalve (20).

3. Safety device for the tipping apparatuses of the telescopic hydraulic hoist tipping bodies of the lorries, as per claim 1), characterized in that to realize a device to be installed on the lorries with no pneumatic commandes, at the input of the oil duct (24) of the telescopic cylinder (2) an electrovalve (25) is to be set up to be driven through an electric line (26) by means of an electric switch (27) to be commanded by a descent control (28) mechanically.

## Patentansprüche

1. Sicherheitseinrichtung für die hydraulisch betätigte teleskopi sche Kippeinrichtung an Lastkraftwagen, wobei an der Eingangsseite des Oelanschlusses (1) des teleskopierbaren Zylinders (2), der die Kippvorrichtung des Fahrzeugteils des Lastkraftwagens bildet, ein elektrisches Ventil (3) angeordnet ist; dadurch gekennzeichnet, daß:
- das elektrische Ventil (3) über eine Leitung (4) mit einem Relais (5) verbunden ist, das über elektrische Leitungen (6 und 7) durch Druckschalter (8 und 9) gestartet werden kann, die dur Pneumatikleitungen (10 und 11) angesteuert werden, welche parallel mit den Pneumatikleitungen zum schnellen Absenken (12) und zum langsamen Absenken (13) angeschlossen sind, wobei die beiden genannten Pneumatikleitungen einen Teil des Pneumatiksystems des Lastkraftwagens bilden;
- die Pneumatikleitungen zum schnellen Absenken (12) und zum langsamen Absenken (13) einen öldynamischen Verteiler (14) antreiben, der über eine Leitung (15) mit einem Tank (16) verbunden ist and Oel mittels der Hydraulikpumpe (17) aufnimmt und dieses in den teleskopierbaren Zylinder (2) über eine Leitung (18) abgibt;
- im Falle eines plötzlichen Druckabfalls des Oels in der Leitung (18) eine sofortige Inbetriebsetzung des elektrischen Ventils (3) auftritt, um ein Abfließen des Oels aus dem teleskopierbaren Zylinder (2) zu verhindern;
- eine Abwärtsbewegung des teleskopierbaren Zylinders (2) nur dann zugelassen wird, wenn - durch das Einsetzen der Absenksteuerung - in den Pneumatikleitungen zum schnellen Absenken (12) oder zum langsamen Absenken (13) ein geeigneter Druck erzeugt wird, so daß die Druckschalter (8 und 9 angesteuert werden, die das elektrische Ventil (3) über die elektrischen Leitungen (6 and 7), über das Relais (5) und über die weitere elektrische Leitung (4) aktivieren, so daß der Abfluß des Oels über den Anschluß (1) des teleskopierbaren Zylinders (2) ermöglicht wird.

2. Sicherheitseinrichtung für die hydraulisch betätigte teleskopi sche Kippeinrichtung an Lastkfraftwagen nach Anspruch 1, dadurch gekennzeichnet, daß in einer speziellen Ausführungsform am Eingang des Oelanschusses (19) des teleskopierbaren Zylinders (2) ein elektrisches Ventil (20) angeordnet ist, das durch eine elektrische Leitung (21) durch Druckschalter (22 und 23) zu aktivieren ist, die auf dem Grundkörper des elektrischen Ventils (20) selbst angebracht sind.

3. Sicherheitseinrichtung für die hydraulisch betätigte teleskopi sche Kippeinrichtung an Lastkraftwagen nach Anspruch 1, dadurch gekennzeichnet, daß zur Realisierung einer auf Lastkraftwagen ohne pneumatische Steuerungen zu installierenden Einrichtung am Eingang des Oelanschlusses (24) des teleskopierbaren Zylinders (2) ein elektrisches Ventil (25) angebracht ist, das durch eine elektrische Leitung (26) mittels eines elektrischen Schalters (27) anzusteuern ist, der mechanisch über eine Absenksteuerung (28) zu betätigen ist.

## Revendications

1. Installation de sécurité pour le dispositif de basculement télescopique actionné hydrauliquement pour camions fournissant la mise en place, au niveau de l'entrée du conduit d'huile (1) du cylindre télescopique (2) qui forme l'appareil de basculement de la caisse du camion, d'une électrovanne (3), caractérisé en ce que:
- l'électrovanne (3) est reliée par une ligne (4) à un relais (5) à démarrer, par l'intermédiaire de lignes électriques (6 et 7),par des commutateurs de pression (8 et 9) excités par l'intermédiaire de lignes pneumatiques (10 et 11) reliées en parallèle aux lignes pneumatiques de descente rapide (12) et de descente lente (13), lesdites deux lignes pneumatiques faisant partie du système pneumatique du camion,
- les lignes pnaumatiques de descente rapide (12) et de descente lente (13) entraînent un distributeur oléodynamique (14) qui, à l'aide d'un conduit (15) est situé à l'extérieur d'un réservoir (16), extrait de l'huile par l'intermédiaire de la pompe hydraulique (17) et l'envoie dans le cylindre télescopique (2) à travers un conduit (18),
- dans le cas où survient une chute soudaine de pression d'huile dans le conduit (18), l'électrovanne (3) entre instantanément en fonctionnement pour empêcher l'écoulement descendant d'huile depuis le cylindre télescopique (2),
- la course vers le bas du cylindre télescopique (2) n'est alors permise que lorsque, par l'intermédiaire de l'enclenchement de la commande de descente, dans les lignes pneumatiques de descente rapide (12) ou de descente lente (13), une pression adaptée est produite de manière à exciter les commutateurs de pression (8 et 9), qui activent lélectrovanne (3) par l'intermédiaire des lignes électriques (6 et 7), du relais (5) et de l'autre ligne électrique (4), en permettant ainsi l'écoulement descendant d'huile à partier du conduit (1) du cylindre télecopique (2).

2. Installation de sécurité pour le dispositif de basculement télescopique actionné hydrauliquement pour camions selon la revendication 1, caractérisé en ce que dans un mode particulier de réalisation est agencée au niveau de l'entrée du conduit d'huile (19) du cylindre télescopique (2) une électrovanne (20) à actionner, par l'intermédiaire de lignes électriques (21), par des commutateurs de pression (22 et 23) fixés sur le corps lui-même de l'électrovanne (20).

3. Installation de sécurité pour le dispositif de basculement télescopique actionné hydrauliquement pour camions selon la revendication 1, caractérisé en ce que pour réaliser un dispositif à installer sur les camions n'ayant pas de commande pneumatique, une électrovanne (25) est mise au niveau de l'entrée du conduit d'huile (24) du cylindre télescopique (2) pour qu'elle soit entraînée par l'intermédiaire d'une ligne électrique (26) à l'aide d'un commutateur électronique (27) qui est commandé mécaniquement par une commande de descente (28).
